# EUROPÄISCHE PATENTSCHRIFT

(11) **EP 2 145 724 B1**
(45) Veröffentlichungstag und Bekanntmachung des Hinweises auf die Patenterteilung: **13.04.2011**
(21) Anmeldenummer: 09006404.9
(22) Anmeldetag: 12.05.2009
(51) Int. Cl.: B23Q 1/66, B23Q 11/00, F16P 3/14

(54) **Bearbeitungszentrum mit einer Werkstücktransporteinrichtung und einem Werkstückbereitstellungsplatz mit opto-elektronischer Schutzeinrichtung**
Processing centre with a workpiece transport device and a workpiece preparation place with optoelectronic protection device
Centre de traitement doté d'un dispositif de transport de pièce usinée et d'une place de préparation de pièce usinée dotée d'un dispositif de protection optoélectronique

(30) Priorität: 15.07.2008 DE 102008033195
(43) Veröffentlichungstag der Anmeldung: 20.01.2010
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, Dipl.-Ing.(FH), 78598 Königsheim (DE)
(74) Vertreter: Hager, Thomas Johannes

(56) Entgegenhaltungen:
- EP-A1- 1 321 224
- DE-A1- 19 527 832
- DE-A1-102005 063 217
- DE-A1-102006 024 407

## Beschreibung

Die Erfindung betrifft ein Bearbeitungszentrum zur spanenden Bearbeitung mit einer kraftbetätigten Werkstücktransporteinrichtung zum Verfahren von Werkstücken oder Werkstückpaletten zwischen einem am oder im Bearbeitungszentrum angeordneten Werkstückbereitstellungsplatz und einem im Arbeitsraum des Bearbeitungszentrums angeordneten Werkstücktisch.

Dabei erfolgt die Verfahrbewegung bei einer kraftbetätigten Einrichtung immer durch Antriebe, z. B. durch elektromotorische Antriebe, hydraulische Antriebe oder pneumatische Antriebe.

Um die unproduktiven Verlustzeiten beim Rüsten zu minimieren, werden zunehmend Bearbeitungszentren zur spanenden Bearbeitung mit automatischen Werkstücktransporteinrichtungen ausgestattet. Diese Werkstücktransporteinrichtungen können integraler Bestandteil des Bearbeitungszentrums sein oder es kann sich um eigenständige Maschinen handeln, die an das jeweilige Bearbeitungszentrum angestellt werden. Die Werkstücktransporteinrichtung kann dabei je nach Maschinenaufbau des Bearbeitungszentrums (Fahrständer-Bauform, Gantry-Bauform, Kreuztisch-Bauform usw.) vor, seitlich oder hinter dem Arbeitsraum des Bearbeitungszentrums angeordnet werden.

Mit diesen Werkstücktransporteinrichtungen wird ein zu bearbeitendes Werkstück automatisch von einem Werkstückbereitstellungsplatz aufgenommen und in den Arbeitsraum des Bearbeitungszentrums transportiert und dann über automatische Spannvorrichtungen mit dem Werkstücktisch des Bearbeitungszentrums verbunden. Nach der Fertigstellung der Werkstückbearbeitung wird das Werkstück wieder von der Werkstücktransporteinrichtung aus dem Arbeitsraum des Bearbeitungszentrums heraustransportiert und in einem Werkstückbereitstellungsplatz abgelegt. Der Werkstückbereitstellungsplatz kann als Rüststation mit festem oder drehbarem Rüsttisch oder als stationäres Werkstückregal oder als beweglicher Werkstückspeicher mit mehreren Werkstückablageplätzen oder dergleichen ausgebildet sein.

In der EP 1 321 224 B2 ist ein Bearbeitungszentrum beschrieben, bei dem die automatische Werkstücktransporteinrichtung als separate Einheit vor dem eigentlichen Bearbeitungszentrum angebaut ist. Das in der EP 1 321 224 B2 beschrieben Bearbeitungszentrum besitzt einen Werkstückbereitstellungsplatz, der als Rüststation ausgebildet ist. Die Rüststation kann optional mit einem drehbaren Rüsttisch ausgestattet werden, um dadurch den Rüstvorgang für den Bediener zu erleichtem.

Bei der EP 1 321 224 B2 fährt die Werkstücktransporteinrichtung zum Werkstückwechsel in den Werkstückbereitstellungsplatz ein. Der Zutritt zum Werkstückbereitstellungsplatz und somit auch mittelbar zur Werkstücktransporteinrichtung ist über eine manuell betätigbare zweiflüglige Schwenktüranordnung mechanisch abgesichert. Diese so genannte beweglich trennende Schutzeinrichtung verhindert den Zutritt und Zugriff zu gefährlichen Maschinenbewegungen und ist von hoher sicherheitstechnischer Bedeutung. In der EP 1 321 224 B2 ist über eine sicherheitsrelevante Stellungsabfrage der Schwenktüranordnung nichts weiter ausgeführt. Es ist aber Stand der Sicherheitstechnik, dass die Stellung der Schwenktüranordnung (Schließstellung und/oder Öffnungsstellung) über einen oder mehrere Sicherheitsschalter, zum Beispiel elektromechanische Positionsschalter mit zwangsbetätigten Öffnerkontakten, abgefragt wird. Der oder die Sicherheitsschalter sind über eine oder mehrere Signalleitungen mit der Antriebsregelung der kraftbetätigten Transporteinrichtung verbunden. Beim Öffnen der zweiflügligen Schwenktüranordnung, bei welcher ein Zugriff zum Werkstückbereitstellungsplatz und zur Werkstücktransporteinrichtung möglich ist, wird eine Notstopp-Funktion an die Antriebsregelung der Werkstücktransporteinrichtung ausgegeben, und die Werkstücktransporteinrichtung geht in den sicheren Halt. Es ist aber auch denkbar, dass der Verfahrbereich der Werkstücktransporteinrichtung beim Öffnen der Tür soweit über die Antriebsregelung sicher eingeschränkt wird (sichere Wegbegrenzung), dass ein genügend großer Sicherheitsabstand zwischen Werkstücktransporteinrichtung und Werkstückbereitstellungsplatz entsteht, so dass der Bediener aufgrund des Sicherheitsabstandes keine Zugriffsmöglichkeiten zu gefährlichen Bewegungen der Werkstücktransporteinrichtung hat. In der vorliegenden Ausführungsform wird aber aufgrund der vorhandenen geometrischen Verhältnisse beim Öffnen der Schwenktüranordnung eine Notstopp-Funktion ausgegeben und die Werkstücktransporteinrichtung wird über die Antriebsregelung in den sicheren Halt überführt.

Unter einem sicheren Halt bzw. unter einer sicheren Wegbegrenzung versteht man einen einfehlersicheren Zustand. Das heißt, ein Fehler in der Abschalteinrichtung der Antriebsregelung für die Transporteinrichtung oder ein Fehler in der Wegbegrenzungseinrichtung der Antriebsregelung für die Transporteinrichtung darf nicht zu einem unkontrollierten Anlauf oder zu einem unkontrollierten Weiterlauf der Transporteinrichtung führen. Die Anforderungen an einen sicheren Halt bzw. an die sichere Wegbegrenzung sind in der europäischen Sicherheitsnorm EN 954-1 festgeschrieben und werden dort durch Steuerungskategorien (1 bis 4) klassifiziert. Je höher die Steuerungskategorie, desto größer ist die Widerstandsfähigkeit der Steuerung bzw. der Regelung gegenüber Fehlern. Für die vorliegende Maschinengattung sind ein sicherer Halt und/oder eine sichere Wegbegrenzung nach Steuerungskategorie 3 erforderlich. Beim Schließen der zweiflügligen Schwenktüranordnung, bei der kein Zugriff zum Werkstückbereitstellungsplatz und zur Werkstücktransporteinrichtung möglich ist, wird im vorliegenden Fall eine automatische Quittierung an die Antriebsregelung der Werkstücktransporteinrichtung ausgegeben, und die Werkstücktransporteinrichtung kann wieder automatisch, zum Beispiel über ein Ablaufprogramm, verfahren werden. Diese so genannte automatische Quittierung nach dem Schließen der Schutzeinrichtung ist im vorliegenden Fall sicherheitstechnisch nicht bedenklich, da die trennende bewegliche Schutzeinrichtung in der vorliegenden Ausführungsform aufgrund der zweiflügligen Schwenktüranordnung nicht hintertretbar ist. Aufgrund des konstruktiven Aufbaus der zweiflügligen Schwenktüranordnung wird in der vorliegenden Ausführungsform eine Türschleuse realisiert, d. h., in der offenen Zugangsstellung zum Werkstückbereitstellungsplatz ist eine trennende Schutzeinrichtung zwischen Bediener und Werkstücktransporteinrichtung vorhanden, so dass auch in der offenen Zugangsstellung kein Durchtritt für den Bediener in den Bereich der Werkstücktransporteinrichtung möglich ist, und in der Zwischenstellung zwischen geschlossener und geöffneter Zugangsstellung ist der Öffnungsspalt der zweiflügligen Schwenktüranordnung immer so klein, dass sich keine Person durch diesen Spalt durchzwängen kann.

Unter einer hintertretbaren Schutzeinrichtung versteht man generell eine Schutzeinrichtung, bei der es möglich ist, dass sich eine Person im begehbaren Gefahrenbereich aufhält, während die trennende Schutzeinrichtung geschlossen wird. Dies ist immer dann der Fall, wenn über eine geöffnete körpergroße Zugangstür ein ungehinderter Zugang in den begehbaren Gefahrenbereich möglich ist. In so einem Fall darf ein Schließen der Zugangstür bzw. ein Schließen der beweglich trennenden Schutzeinrichtung zu keinem automatischen Anlauf der gefährlichen Bewegungen führen, und es muss eine zusätzliche manuell betätigbare Quittiertaste vorhanden sein, mit welcher der automatische Anlauf freigegeben werden kann. Diese manuell betätigbare Quittiertaste muss außerhalb des Gefahrenbereichs angeordnet sein, und zwar an einem Ort, von wo aus der Gefahrenbereich sehr gut und übersichtlich einsehbar ist. Dadurch soll sichergestellt werden, dass die gefährlichen Bewegungen bewusst durch eine gezielte Betätigung einer Befehlseinrichtung quittiert bzw. gestartet werden und dass vor Betätigen der Befehlstaste auch noch eine visuelle Kontrolle des Gefahrenbereichs durch den Bediener möglich ist, um versehentlich eingeschlossene Personen zu erkennen.

Der Vorteil der in der EP 1 321 224 B2 offenbarten Schutzeinrichtung für den Werkstückbereitstellungsplatz ist darin zu sehen, dass eine beweglich mechanisch trennende Schutzeinrichtung eine zuverlässige und bewährte materielle Trennung von Mensch und Gefahr ermöglicht. Mit relativ geringem technischem Aufwand kann so eine Schutzeinrichtung realisiert werden. Außerdem werden durch eine beweglich mechanisch trennende Schutzeinrichtung die Außenabmessungen der Gesamtmaschine (Bearbeitungszentrum, Werkstücktransporteinrichtung und Werkstückbereitstellungsplatz) nicht wesentlich vergrößert, was unter dem Gesichtspunkt des sehr teuren Aufstellplatzes für eine Maschine kein unbedeutender wirtschaftlicher Gesichtspunkt ist.

Eine beweglich mechanisch trennende Schutzeinrichtung hat aber immer den prinzipiellen Nachteil, dass die Schutzeinrichtung, besonders bei großen Zugangsöffnungen, die oft auch hintertretbar sein müssen, manuell nur schwer für den Bediener zu handhaben ist. Außerdem erschwert eine trennende bewegliche Schutzeinrichtung in der Regel immer den freien Zugang und den freien Durchblick auf den über die Schutzeinrichtung abgesicherten Arbeitsbereich. Aus diesem Grund werden teilweise zur Absicherung von Gefahrenbereichen so genannte Schutzeinrichtungen mit Annäherungsfunktion, speziell berührungslos wirkende Schutzeinrichtungen (BWS), eingesetzt. Diese Schutzeinrichtungen haben den großen Vorteil, dass durch diese Art von Schutzeinrichtung ein freier ungehinderter Zugang und eine freie Durchsicht zum abgesicherten Prozessbereich in der Regel immer gewährleistet sind. Außerdem ist die Handhabung der Schutzeinrichtung für den Bediener denkbar einfache, da bei Körperkontakt mit dem von der Schutzeinrichtung erzeugten Überwachungsbereich die gefahrbringende Bewegung automatisch stillgesetzt oder ein sicherer Verfahrbereich mit ausreichend großem Sicherheitsabstand zum Bediener eingestellt wird.

Die am meisten verbreiteten berührungslos wirkenden Schutzeinrichtungen sind opto-elektronische Einrichtungen, wie zum Beispiel Lichtvorhänge und Lichtschranken, Laserscanner oder Kameras.

Der große Nachteil der opto-elektronischen Einrichtungen ist aber der, dass die Grenze zwischen dem abzusichernden Gefahrenbereich und dem gefahrlosen Bereich durch einen Mindestabstand (Sicherheitsabstand) zur gefahrbringenden Bewegung der Maschine fest definiert werden muss und dass bei Überschreiten dieses Mindestabstands (Sicherheitsabstands) durch eine Person zwangsläufig ein Notstopp oder eine Verfahrbegrenzung für die gefahrbringenden Bewegungen der Maschine ausgelöst werden muss. Da jede kraftbetätigte Maschine eine gewisse Nachlaufzeit bzw. einen gewissen Nachlaufweg hat und die Geschwindigkeit der Person, die in den Gefahrenbereich eindringt, unbekannt ist, muss der Überwachungsbereich einen ausreichend großen Abstand zur eigentlichen Gefahrenstelle haben. Es muss beispielsweise sichergestellt sein, dass auch bei einer sehr schnellen Bewegung, beispielsweise bei einem Sturz der Bedienperson, die kraftbetätigte Maschine noch rechtzeitig zum Stillstand kommt, bevor die Person in irgendeiner Weise mit dem Gefahrenbereich der kraftbetätigten Maschine in Berührung kommen kann.

Der Mindestabstand (Sicherheitsabstand) zur gefahrbringenden Bewegungen kann je nach Anwendungsfall bis zu einigen Metern betragen. Mindest- bzw. Sicherheitsabstände zur Absicherung eines Werkstückbereitstellungsplatzes gegenüber einer Werkstücktransporteinrichtung von 2 bis 4 Meter sind in der Praxis durchaus üblich. Dies bedeutet, dass vor dem Werkstückbereitstellungsplatz ein relativ großer Bereich freigehalten werden muss, der nicht ohne weiteres für andere Arbeiten zur Verfügung steht. Denn bei jedem, auch unabsichtlichen Kontakt mit dem von der opto-elektronischen Schutzeinrichtung überwachten Bereich, wird die betreffende Maschine automatisch stillgesetzt oder der Verfahrbereich wird automatisch eingeschränkt. Die stillgesetzten oder eingeschränkten Bewegungen müssen danach dann relativ umständlich und aufwendig über eine separate Quittiertaste wieder manuell neu quittiert bzw. gestartet werden. Dies beeinflusst die Verfügbarkeit und somit die Wirtschaftlichkeit der Maschine sehr negativ. Ein unbemerktes Stillsetzen kann durchaus einen mehrstündigen Produktionsausfall zur Folge haben. Außerdem ist durch den freigehaltenen Überwachungsbereich vor der Maschine der Platzbedarf für die Maschine zum Teil noch wesentlich größer als bei einer vergleichbaren Maschine mit einer beweglich mechanisch trennenden Schutzeinrichtung. Diese beiden wesentlichen Nachteile - versehentliche Auslösen eines Notstopps oder einer Wegbegrenzung mit nachfolgender aufwendiger Quittierung und großer Platzbedarf - haben bislang dazu geführt, dass opto-elektronische Schutzeinrichtungen, trotz ihrer großen Vorteile, für die Absicherung eines Werkstückbereitstellungsplatzes an einem Bearbeitungszentrum noch keine große Verbreitung gefunden haben.

Ausgehend aus diesem Stand der Technik liegt der vorliegenden Erfindung die Aufgabe zugrunde, eine Vorrichtung und ein Verfahren bereit zu stellen, mit der eine opto-elektronische Schutzeinrichtung für die Absicherung eines Werkstückbereitstellungsplatzes eines Bearbeitungszentrums mit Werkstücktransporteinrichtung so weit verbessert werden kann, dass die über die opto-elektronische Schutzeinrichtung zwangsläufig und automatisch ausgelösten Sicherheitsfunktionen von derselben auch wieder zwangsläufig und automatisch zurückgesetzt bzw. gelöscht werden, ohne dass dabei eine Person in irgend einer Weise durch bewegliche Maschinenteile der Werkstücktransporteinrichtung gefährdet wird.

Diese Aufgabe wird durch eine Vorrichtung gemäß Anspruch 1 bzw. ein Verfahren gemäß Anspruch 16 gelöst.

Die Unteransprüche beinhalten vorteilhafte Weiterbildungen und Ausgestaltungen der Erfindung.

Der Vorteil der erfindungsgemäßen Vorrichtung und des erfindungsgemäßen Verfahren ist insbesondere darin zu sehen, dass insgesamt die Maschinenlaufzeit des Bearbeitungszentrums mit Werkstücktransporteinrichtung erhöht wird, da mit der vorliegenden Erfindung nur in Ausnahmefällen eine manuelle Quittierung der ausgelösten Sicherheitsfunktionen notwendig ist. Außerdem führt ein versehentliches Auslösen der Sicherheitsfunktionen nicht zwangsläufig zum endgültigen Maschinenstillstand. Somit kann der Überwachungsbereich der opto-elektronischen Schutzeinrichtung auch auf Bereiche in der Maschinenhalle ausgedehnt werden, die nicht ausschließlich für das Bearbeitungszentrum reserviert sind. Dadurch kann die Hallenfläche optimaler ausgenutzt werden und es wird kein unnötig teurer Aufstellplatz verschenkt.

Weitere Einzelheiten, Merkmale und Vorteile der Erfindung ergeben sich aus der nachfolgenden Beschreibung und den Figuren. Es zeigen:
- Figur 1: eine Draufsicht auf ein erfindungsgemäßes Bearbeitungszentrum nach einer ersten Ausführungsform,
- Figur 2: eine Draufsicht auf ein erfindungsgemäßes Bearbeitungszentrum nach einer zweiten Ausführungsform,
- Figur 3: eine Draufsicht auf ein erfindungsgemäßes Bearbeitungszentrum nach einer dritten Ausführungsform, und
- Figur 4: eine Seitenansicht eines erfindungsgemäßen Bearbeitungszent- rums.

Die Figuren zeigen ein Bearbeitungszentrum 1 mit einer Werkstücktransportvorrichtung 2 und einem Werkstückbereitstellungsplatz 4.

Das Bearbeitungszentrum 1 weist einen Arbeitsraum 36 auf, der von einer Schutzumhausung 20 umgeben ist. Innerhalb der Schutzumhausung 20 befindet sich ein Werkstücktisch 37, auf dem ein Werkstück 30 mittels einer Werkzeugspindel 35 bearbeitet werden kann.

Die Schutzumhausung 20 weist auf der der Werkstücktransportvorrichtung 2 zugewandten Seite eine Zugangsöffnung 24 auf, welche einer zweiflügeligen kraftbetätigten und stellungsüberwachten Schiebetür 21 gegenüberliegt, die ebenfalls in der Schutzumhausung 20 des Bearbeitungszentrums 1 vorgesehen ist.

Die Werkstücktransportvorrichtung 2 ist als Werkstückwechsler ausgebildet und kann eine vertikale Hubbewegung, eine horizontale Transporlbewegung sowie eine Drehbewegung um eine vertikale Drehachse ausführen. Der Werkstückwechsler besitzt einen um eine vertikale Achse drehbaren Doppelgreifer. Der drehbare Doppelgreifer ist auf einer linear verfahrbaren vertikalen Hubeinheit angeordnet.

Der Werkstückbereitstellungsplatz 4 ist von drei Seiten aus für einen Bediener frei zugänglich und wird durch eine opto-elektronische Schutzeinrichtung 5 gegen Hineintreten und gegen Hinaustreten überwacht.

Die opto-elektronische Schutzeinrichtung 5, mit der ein Überwachungsbereich 6 um den Werkstückbereitstellungsplatz 4 erzeugt wird, weist eine Sensoreinrichtung 7 in oder an der opto-elektronischen Schutzeinrichtung 5 auf, welche eine elektromagnetische Strahlung 8 in den Überwachungsbereich 6 aussendet. Hierbei kann die Sensoreinrichtung 7 etwa als Laserscanner ausgebildet sein. Somit wird außerhalb des eigentlichen Werkstückbereitstellungsplatzes 4 ein Überwachungsbereich 31 erzeugt, so dass ein Sicherheitsabstand 32 vertikal gegen Unterkriechen und ein Sicherheitsabstand 33 horizontal gegen Eingreifen in den Gefahrenbereich um den Werkstückbereitstellungsplatzes 4 gewährleistet ist. Hierzu können aber auch mehrere, insbesondere horizontal und flächig ausgebildete Überwachungsbereiche 31 vorgesehen werden.

In oder an der opto-elektronischen Schutzeinrichtung 5 ist auch eine Empfangsund Auswerteinheit 9 angeordnet, welche die aus dem Überwachungsbereich 6 reflektierter elektromagnetischer Strahlung 8 empfängt und auswertet. Weiterhin sind in oder an der opto-elektronischen Schutzeinrichtung 5 Signalund/oder Schaltmittel 10 für die automatische Auslösung einer sicherheitsrelevanten Notstopp-Funktion für die Antriebsregelung und für die Wegbegrenzungsfunktion sowie zusätzliche Signal- und/oder Schaltmittel 12 für eine automatische Quittierung der Notstopp- oder Wegbegrenzungsfunktion angeordnet, welche über Signalleitungen 11 mit der Antriebssteuerung 3 verbunden sind.

Durch eine Zugangsöffnung 25 kann der Werkstückwechsler 2 in den Werkstückbereitstellungsplatz 4 ein- oder ausfahren und somit vom Werkstückbereitstellungsplatz 4 zu bearbeitende Werkstücke 30 aufnehmen oder schon bearbeitet Werkstücke 30 auf den Werkstückbereitstellungsplatz 4 ablegen. Aufgrund der sehr guten Zugänglichkeit des Werkstückbereitstellungsplatzes 4 kann der Bediener ohne große Probleme die Werkstücke 30 auf den Bereitstellungsplatz 4 platzieren. Dies kann, wenn notwendig, mittels Kran, Gabelstapler usw. erfolgen. Durch die sehr gute Zugänglichkeit ist der Bediener in der Auswahl der Hebehilfsmittel nicht eingeschränkt.

Die Zugangsöffnung 25 zum Arbeitsbereich der Werkstücktransporteinrichtung 2 ist durch eine feste trennende Schutzeinrichtung 39 gegen Hintertreten oder Übertreten abgesichert. Des Weiteren ist die Zugangsöffnung 25 zum Arbeitsbereich der Werkstücktransporteinrichtung 2 durch eine beweglich trennende Schutzeinrichtung 38 auch noch gegen Hindurchgreifen abgesichert. Die Stellung der beweglich trennenden Schutzeinrichtung 38 wird überwacht.

Der Zugang zum Arbeitsbereich der Werkstücktransporteinrichtung 2 und zum Bearbeitungszentrum 1 ist über eine seitlich an der Umhausung 23 angeordnete Zugangstür 22 möglich. Dieser Zugang ist notwendig, um Wartungs- und Einrichtarbeiten am Bearbeitungszentrum 1 und an der Werkstücktransporteinrichtung 2 vornehmen zu können. Die seitliche Zugangstür 22 muss natürlich hintertretbar sein. Die Stellung der seitlichen Zugangstür 22 wird überwacht.

Beim Öffnen der Zugangstür 22 wird über eine mit der Antriebsregelung 3 verbundene Signalleitung 26 eine Notstopp-Funktion ausgeführt und die Werkstücktransporteinrichtung 2 wird in einen sicheren Halt überführt. Ein Schließen der seitlichen Zugangstür 22 bewirkt jedoch keinen automatischen Anlauf der Werkstücktransporteinrichtung 2. Die Werkstücktransporteinrichtung 2 kann in diesem Fall nur über eine manuell betätigbare Quittiertaste 27 freigegeben bzw. gestartet werden, welche über eine Signalleitung 28 mit der Antriebsregelung 3 verbunden ist. Die Quittiertaste 27 befindet sich außerhalb der Umhausung 23 an einer Stelle 29, von wo aus der Arbeitsbereich der Werkstücktransporteinrichtung 2 für den Bediener sehr gut einsehbar ist. Beim Starten bzw. bei der Freigabe der Werkstücktransporteinrichtung 2 muss sich der Bediener immer visuell vergewissern, dass sich keine Person 19 im Gefahrenbereich der Werkstücktransporteinrichtung 2 befindet. Beim Eintritt einer Person 19 vom Transport- und Verkehrsweg 18 inden Überwachungsbereich 6 werden in Abhängigkeit mit der Stellung der als Schiebetür ausgebildeten Schutzeinrichtung 38 folgende sicherheitsrelevante Reaktionen ausgeführt:
a) Wenn die Schutzeinrichtung 38 geschlossen und folglich kein Durchgreifen in den Arbeitsbereich der Werkstücktransporteinheit 2 möglich ist, wird über die opto-elektronische Schutzeinrichtung 5 eine Wegbegrenzungs-Funktion für die Werkstücktransporteinrichtung 2 aktiviert, und die Werkstücktransporteinrichtung 2 kann nicht mehr in den Werkstückbereitstellungsplatz 4 einfahren. Verfahrbewegungen in Richtung des Bearbeitungszentrum 1 sind aber durchaus noch möglich, so dass in dieser Betriebsart noch Transportarbeiten zum oder vom Bearbeitungszentrum 1 automatisch abgearbeitet werden können. Eine sichere Wegbegrenzung in Richtung des Werkstückbereitstellungsplatzes 4 ist sicherheitstechnisch unbedingt notwendig, denn die als Schiebetür ausgebildete Schutzeinrichtung 38 hat keine ausreichende Rückhaltefähigkeit gegen eine Fehlbewegung der Werkstücktransporteinrichtung 2. Bei einer Fehlprogrammierung ist die Werkstücktransporteinrichtung 2 durchaus in der Lage, die Schutzeinrichtung 38 zu durchstoßen.
b) Wenn die Schutzeinrichtung 38 geöffnet und folglich ein Durchgreifen in den Arbeitsbereich der Werkstücktransporteinheit 2 möglich ist, wird über die opto-elektronische Schutzeinrichtung 5 eine Notstopp-Funktion für die Werkstücktransporteinrichtung 2 aktiviert, und die Werkstücktransporteinrichtung 2 wird in den sicheren Halt überführt und kann nicht mehr bewegt werden.

Diese Sicherheits-Funktionen bleiben solange aktiv, solange sich eine Person 19 im Überwachungsbereich 6 befindet. Verlässt die Person 19 den Überwachungsbereich 6, so werden diese Sicherheits-Funktionen durch die opto-elektronische Schutzeinrichtung 5 wieder automatisch zurückgestellt bzw. gelöscht, und die Werkstücktransporteinrichtung 2 kann wieder ohne Einschränkung betrieben werden.

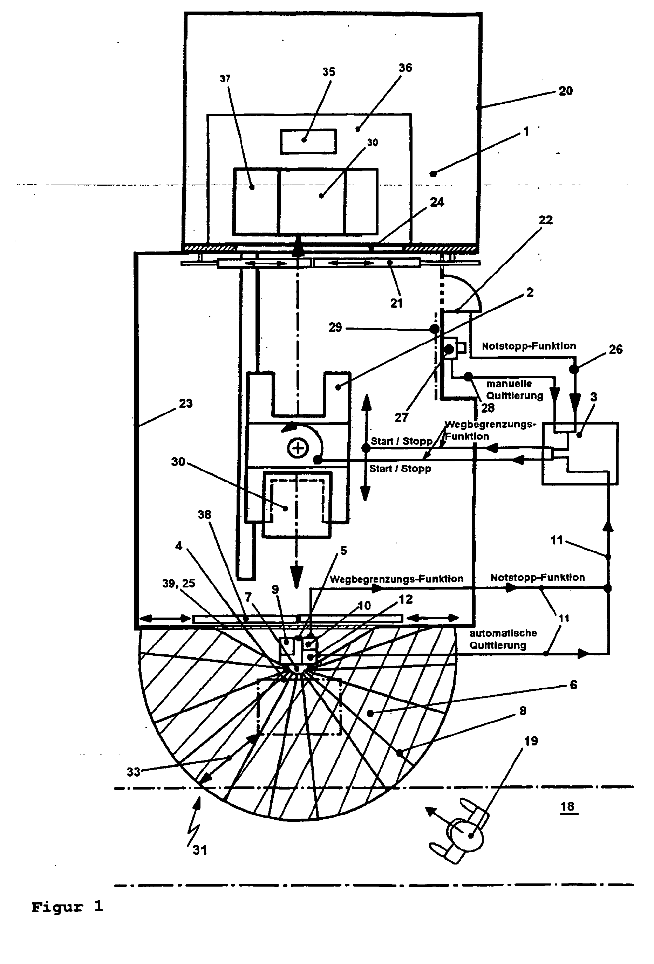

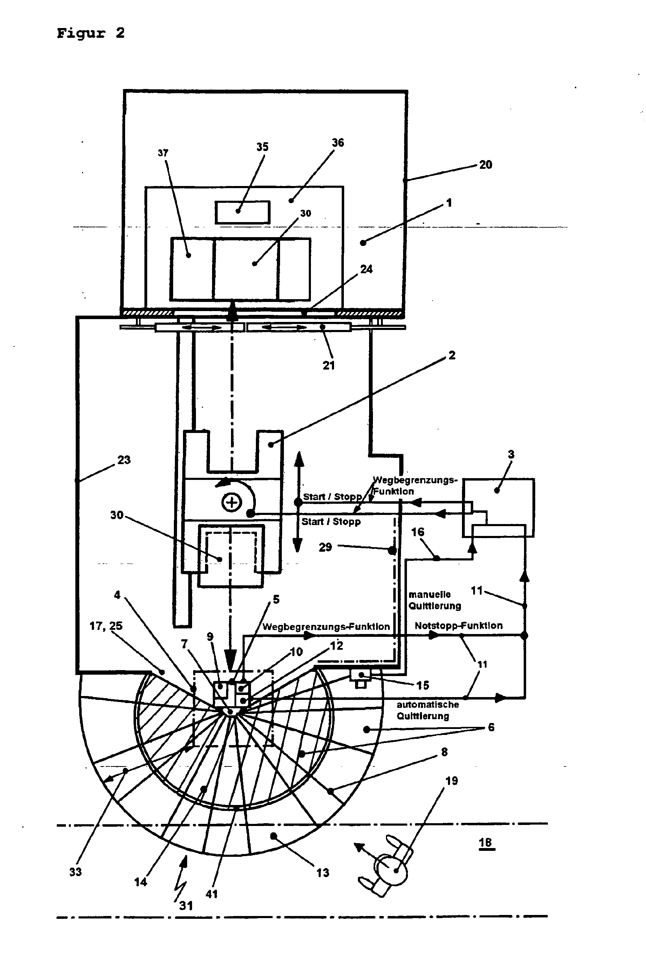

Im Folgenden wird die Ausführungsform nach Figur 2 erläutert, wobei der Einfachheit halber nur die Unterschiede zur Ausführungsform nach Figur 1 beschrieben werden.

Die Zugangsöffnung 25 ist für eine Person 19 hintertretbar (hintertretbarer Bereich 17). Über den Werkstückbereitstellungsplatz 4 können zu Rüst- und Einrichtarbeiten die Werkstücktransporteinrichtung 2 und das Bearbeitungszentrum 1 erreicht werden. Eine beweglich trennende Schutzeinrichtung und ein Hintertretschutz (Übertretschutz) an der Zugangsöffnung 25 fehlen. Die seitliche Zugangstüre 22 mit der Quittiereinrichtung kann in diesem Ausführungsbeispiel entfallen, muss aber auch nicht.

Der Überwachungsbereich 6 für den Werkstückbereitstellungsplatz 2 ist in zwei Überwachungsbereiche 13, 14 unterteilt, nämlich einen äußeren Überwachungsbereich 13 und einen inneren Überwachungsbereich 14. Der innere Überwachungsbereich 14 schließt unmittelbar an die Umhausung 23 der Werkstücktransporteinheit 2 an und entspricht ungefähr der Außenkontur eines begehbaren, großflächigen Podestes 41, das beispielsweise eine Höhe von 100 bis 300 mm aufweisen kann. Das Podest 41 hat im wesentlichen drei Aufgaben, zum Ersten eine ergonomisch sinnvolle Arbeitshöhe für den Bediener am Rüsttisch 34 zu gewährleisten, zum Zweiten Verschmutzungen (Späne, Kühlschmierstoffreste usw.), die aus der spanenden Bearbeitung des Werkstückes 30 herrühren, aufzufangen und zum Dritten dem Bediener den inneren Überwachungsbereich 14 kenntlich zu machen, so dass ein versehentliches Auslösen des inneren, nicht mehr automatisch quittierbaren Überwachungsbereiches 14 äußerst unwahrscheinlich ist. Der Bediener wird in der Regel das Podest 41 nur besteigen, wenn er konkrete Arbeiten am Werkstückbereitstellungsplatz 4 oder an der Werkstücktransporteinrichtung 2 vorzunehmen hat. Somit kann ein versehentliches Auslösen des inneren Überwachungsbereiches 14 durch zufällig anwesendes Personal in der Praxis nahezu ausgeschlossen werden. Anstelle eines Podestes 41 kann auch eine farbige Markierung, zum Beispiel eine gelbschwarze Markierung, als Kennzeichnung für den inneren Überwachungsbereich 14 auf dem Hallenboden angebracht werden. Nur eine farbliche Markierung ist aber sicherlich nicht so wirkungsvoll wie eine mechanische Barriere in Form eines begehbaren Podestes 41.

Beim Eintritt einer Person in den äußeren Überwachungsbereich 13 wird über die opto-elektronische Schutzeinrichtung 5 je nach Risikoanalyse eine Wegbegrenzungs-Funktion oder eine Notstopp-Funktion aktiviert. Verlässt die Person 19 den äußeren Überwachungsbereich 13 wieder - versehentliches Verletzen des barrierefreien Überwachungsbereiches 13 durch zufällig anwesende Personen - ohne den inneren Bereich 14 zu berühren, so werden diese Sicherheits-Funktionen durch die opto-elektronische Schutzeinrichtung 5 wieder automatisch zurückgestellt bzw. gelöscht, und die Werkstücktransporteinrichtung 2 kann wieder ohne Einschränkung betrieben werden.

Verletzt die Person aber den inneren Überwachungsbereich 14, so wird eine Notstopp-Funktion ausgelöst, wenn nicht schon eine Notstopp-Funktion durch das äußere Überwachungsfeld 13 aktiviert wurde, und diese SicherheitsFunktion (Notstopp) kann nicht mehr durch die opto-elektronische Schutzeinrichtung 5 durch Verlassen des inneren 14 oder äußeren Überwachungsbereichs 13 automatisch zurückgestellt bzw. gelöscht werden. Die Werkstücktransporteinrichtung 2 kann in diesem Fall nur über eine manuell betätigbare Freigabetaste 15 freigegeben bzw. gestartet werden, welche über eine Signalleitung 16 mit der Antriebsregelung 3 verbunden ist. Die Freigabetaste 15 befindet sich außerhalb der Umhausung 23 an einer Stelle 29, von wo aus der Arbeitsbereich der Werkstücktransporteinrichtung 2 gut einsehbar ist.

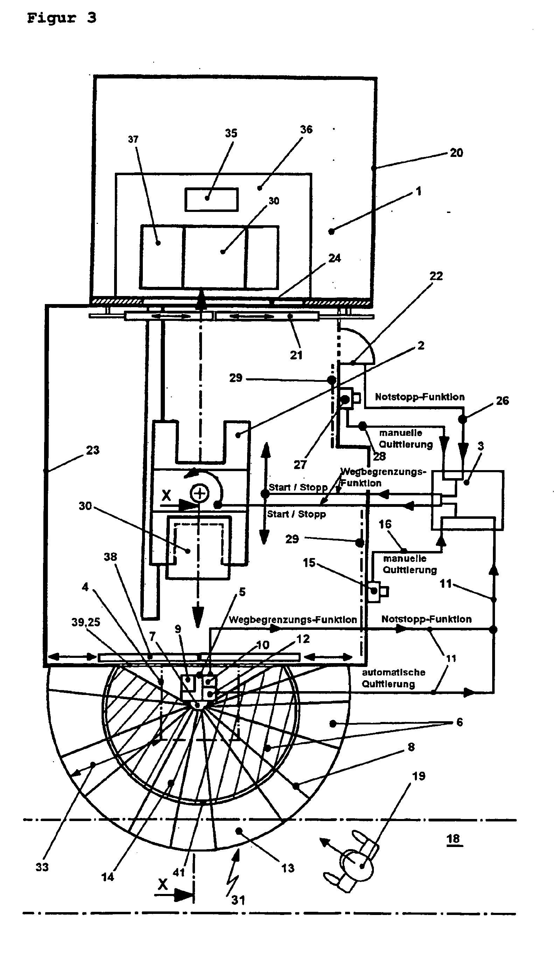

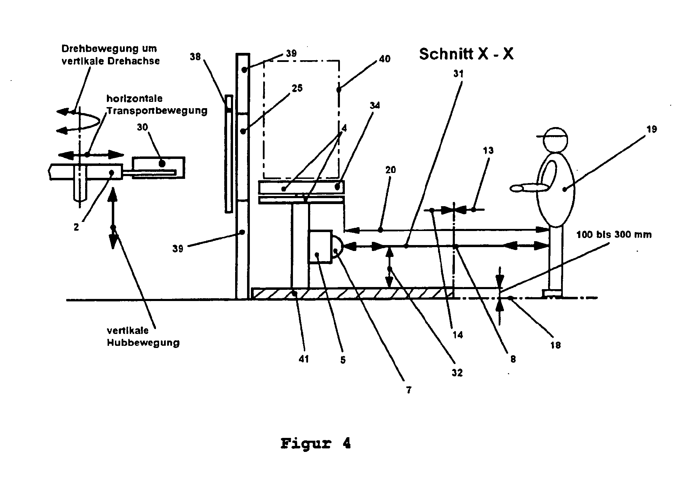

Nachfolgend wird die Ausführungsform nach Figur 3 und 4 erläutert, wobei auch hier der Einfachheit halber nur die Unterschiede zur Ausführungsform nach Figur 1 beschrieben werden.

Der Werkstückbereitstellungsplatz 4 ist als drehbarer Rüsttisch 34 ausgeführt. Der Überwachungsbereich 6 weist aufgrund der konstruktiven Ausgestaltung des Werkstückbereitstellungsplatzes 4 einen übertretbaren Schutzbereich 40 auf. Das heißt, die opto-elektronische Überwachungseinheit 5 erfasst keine Personen, die sich aus welchem Grund auch immer am Rüsttisch 34 befinden. Diese Situation ist in der Praxis sehr unwahrscheinlich, muss aber aufgrund des sehr großen Verletzungsrisikos doch berücksichtigt werden. Aus diesem Grund ist der Überwachungsbereich 6 wie in Figur 2 in zwei Überwachungsbereiche 13, 14 unterteilt. Wegen der Funktionalität der Sicherheitsfunktionen (Notstopp-Funktion und Wegbegrenzungsfunktion) wird auf die Beschreibung der Figur 2 verwiesen.

Im Gegensatz zur Ausführungsform nach Figur 2 kann jedoch bei geschlossener Schutzeinrichtung 38 und Eindringen in den inneren Überwachungsbereich 14 entsprechend der Risikoanalyse auf eine Notstopp-Funktion für die Werkstücktransporteinrichtung 2 verzichtet werden. Eine Wegbegrenzungs-Funktion für die Werkstücktransporteinrichtung 2 ist in diesem Fall ausreichend, da keine Person 19 aufgrund der geschlossenen Schutzeinrichtung 38 in den Arbeitsraum der Werkstücktransporteinrichtung 2 durchgreifen kann.

### Bezugszeichenliste

- 1: Bearbeitungszentrum
- 2: Werkstücktransporteinrichtung
- 3: Antriebsregelung
- 4: Werkstückbereitstellungsplatz
- 5: opto-elektronische Schutzeinrichtung
- 6: Überwachungsbereich
- 7: Sensoreinrichtung
- 8: Elektromagnetische Strahlung
- 9: Empfangs- und Auswerteeinheit
- 10: Signal- und/oder Schaltmittel für die Notstopp-Funktion und für die Weg- begrenzungs-Funktion
- 11: Signalleitung
- 12: Signal- und/oder Schaltmittel für die automatische Quittierung
- 13: äußerer Überwachungsbereich
- 14: innerer Überwachungsbereich
- 15: manuell betätigbare Freigabetaste
- 16: Signalleitung
- 17: hintertretbarer Bereich
- 18: Transport- und Verkehrsweg
- 19: Person
- 20: Schutzumhausung des Bearbeitungszentrums
- 21: Schiebetür
- 22: Zugangstür
- 23: Umhausung
- 24: Zugangsöffnung
- 25: Zugangsöffnung
- 26: Signalleitung
- 27: Quittiertaste
- 28: Signalleitung
- 29: Stelle
- 30: Werkstück
- 31: Überwachungsbereich
- 32: Sicherheitsabstand vertikal gegen Unterkriechen
- 33: Sicherheitsabstand horizontal gegen Eingreifen
- 34: Rüsttisch
- 35: Werkzeugspindel
- 36: Arbeitsraum
- 37: Werkstücktisch
- 38: Schutzeinrichtung
- 39: feste trennende Schutzeinrichtung
- 40: übertretbarer Schutzbereich
- 41: Podest

## Patentansprüche

1. Bearbeitungszentrum (1) zur spanenden Bearbeitung mit einer kraftbetätigten Werkstücktransporteinrichtung (2) mit Antriebsregelung (3), mit einem mit der Werkstücktransporteinrichtung (2) über eine Zugangsöffnung (25) erreichbaren Werkstückbereitstellungsplatz (4), mit einer berührungslos wirkenden opto-elektronischen Schutzeinrichtung (5), mit der ein Überwachungsbereich (6) um den Werkstückbereitstellungsplatz (4) erzeugt wird, mit einer Sensoreinrichtung (7) in oder an der opto-elektronischen Schutzeinrichtung (5) zur Aussendung von elektromagnetischer Strahlung (8) in den Überwachungsbereich (6), mit einer Empfangs- und Auswerteinheit (9) in oder an der opto-elektronischen Schutzeinrichtung (5) für den Empfang und für die Auswertung von aus dem Überwachungsbereich (6) reflektierter elektromagnetischer Strahlung (8), mit Signal- und/oder Schaltmitteln (10) in oder an der opto-elektronischen Schutzeinrichtung (5) für die automatische Auslösung einer sicherheitsrelevanten Notstopp-Funktion für die Antriebsregelung (3) zum Stillsetzen der Werkstücktransporteinrichtung (2) nach dem Eindringen einer Person (19) in den Überwachungsbereich (6) oder für die automatische Auslösung einer sicherheitsrelevanten Wegbegrenzungs-Funktion für die Antriebsregelung (3) zum Sperren des Einfahrbereichs der Werkstücktransporteinrichtung (2) in den Werkstückbereitstellungsplatz (4) nach dem Eindringen einer Person (19) in den Überwachungsbereich (6), und mit einer Signalleitung (11) zwischen der opto-elektronischer Schutzeinrichtung (5) und der Antriebsregelung (3), **dadurch gekennzeichnet, dass** die opto-elektronische Schutzeinrichtung (5) auch noch Signal- und/oder Schaltmittel (12) für die automatische Quittierung der sicherheitsrelevanten Notstopp- oder Wegbegrenzfunktion für die Antriebsregelung (3) der Werkstücktransporteinrichtung (2) nach dem Verlassen der Person (19) aus dem Überwachungsbereich (6) besitzt, so dass die Werkstücktransporteinrichtung (2) wieder ungehindert automatisch anlaufen und wieder ungehindert automatisch in den Werkstückbereitstellungsplatz (4) einfahren kann, wobei der Überwachungsbereich (6) in einen äußeren Überwachungsbereich (13) und in einen inneren Überwachungsbereich (14) unterteilt ist, sowie der innere Überwachungsbereich (14) teilweise nur über eine Barriere in Form eines begehbaren Podestes (41) betretbar ist

2. Bearbeitungszentrum nach Anspruch 1, **dadurch gekennzeichnet, dass** die opto-elektronische Schutzeinrichtung (5) Mittel besitzt, um die automatische Quittierung zu sperren, wenn in den inneren Überwachungsbereich (14) eine Person (19) eingedrungen ist.

3. Bearbeitungszentrum nach Anspruch 1 oder 2, **dadurch gekennzeichnet, dass** die äußeren Abmessungen des inneren Überwachungsbereiches (14) über visuelle Mittel kenntlich gemacht sind.

4. Bearbeitungszentrum nach einem der Ansprüche 1 bis 3, **dadurch gekennzeichnet, dass** die Zugangsöffnung (25) vom Werkstückbereitstellungsplatz (4) zur Werkstücktransporteinrichtung (2) einen für eine Person (19) hintertretbaren (17) oder übertretbaren Bereich aufweist.

5. Bearbeitungszentrum nach Anspruch 4, **dadurch gekennzeichnet, dass** die Zugangsöffnung (25) vom Werkstückbereitstellungsplatz (4) zur Werkstücktransporteinrichtung (2) nur über den inneren Überwachungsbereich (14) für eine Person (19) hintertretbar (17) oder übertretbar ist.

6. Bearbeitungszentrum nach einem der Ansprüche 1 bis 3, **dadurch gekennzeichnet, dass** die Zugangsöffnung (25) vom Werkstückbereitstellungsplatz (4) zur Werkstücktransporteinrichtung (2) durch eine feste trennende Schutzeinrichtung (39) gegen Hintertreten oder Übertreten durch eine Person (19) gesichert ist.

7. Bearbeitungszentrum nach einem der Ansprüche 1 bis 6, **dadurch gekennzeichnet, dass** die Zugangsöffnung (25) von Werkstückbereitstellungsplatz (4) zur Werkstücktransporteinrichtung (2) mit einer kraftbetätigten beweglich trennenden und stellungsüberwachten Schutzeinrichtung (38) gegen Durchgreifen durch eine Person (19) gesichert ist.

8. Bearbeitungszentrum nach Anspruch 7, **dadurch gekennzeichnet, dass** die Ansteuerung der kraftbetätigten, beweglichen trennenden Schutzeinrichtung (38) mit der Antriebssteuerung (3) der Werkstücktransporteinrichtung (2) in einen steuerungstechnischen Zusammenhang steht.

9. Bearbeitungszentrum nach einem der Ansprüche 1 bis 8, **dadurch gekennzeichnet, dass** die Sensoreinrichtung (7) in der opto-elektronischen Schutzeinrichtung (5) als Laserscanner ausgebildet ist.

10. Bearbeitungszentrum nach Anspruch 9, **dadurch gekennzeichnet, dass** der Laserscanner einen oder mehrere horizontal und flächig ausgebildete Überwachungsbereiche (31) erzeugt.

11. Bearbeitungszentrum nach einem der Ansprüche 2 bis 10, **dadurch gekennzeichnet, dass** über eine manuell betätigbare Freigabetaste (15) die automatische Quittierung wieder freigebbar ist, wenn die Person (19) den inneren Überwachungsbereich (14) verlassen hat.

12. Bearbeitungszentrum nach Anspruch 11, **dadurch gekennzeichnet, dass** die manuell betätigbare Freigabetaste (15) außerhalb des Gefahrenbereichs der Werkstücktransporteinrichtung (2) an einer Stelle angebracht ist, von wo aus der Arbeitsbereich der Werkstücktränsporteinrichtung (2) für den Bediener gut einsehbar ist.

13. Bearbeitungszentrum nach einem der vorhergehenden Ansprüchen, **dadurch gekennzeichnet, dass** die Antriebsregelung (3) für die Werkstücktransporteinrichtung (2) Signal- und/oder Schaltmittel besitzt, die einen einfehlersicheren Notstopp und/oder eine einfehlersichere Wegbegrenzung nach Steuerungskategorie 3 der EN 954-1 ermöglichen.

14. Bearbeitungszentrum nach einem der vorhergehenden Ansprüchen, **dadurch gekennzeichnet, dass** die Antriebsregelung (3) für die Werkstücktransporteinrichtung (2) Signal- und/oder Schaltmittel besitzt, die eine einfehlersichere Geschwindigkeitsüberwachung nach Steuerungskategorie 3 der EN 954-1 ermöglichen.

15. Bearbeitungszentrum nach einem der vorhergehenden Ansprüchen, **dadurch gekennzeichnet, dass** der Werkstückbereitstellungsplatz (4) als Rüsttisch, insbesondere als drehbarer Rüsttisch (34) ausgebildet ist.

16. Verfahren zur Sicherung eines Bearbeitungszentrums (1) zur spanenden Bearbeitung mit einer kraftbetätigten Werkstücktransporteinrichtung (2) mit Antriebsregelung (3) und mit einem mit der Werkstücktransporteinrichtung (2) erreichbaren Werkstückbereitstellungsplatz (4) unter Verwendung einer opto-elektronischen Schutzeinrichtung (5), bei welchem mit einer opto-elektronischen Schutzeinrichtung (5) ein Überwachungsbereich (6) um den Werkstückbereitstellungsplatz (4) mittels einer Sensoreinrichtung (7), die elektromagnetische Strahlung (8) aussendet, abgetastet wird und die bei Empfang einer reflektieren Strahlung, die durch Eindringen einer Person (19) in den Überwachungsbereich (6) herrührt, eine Notstopp-Funktion oder eine Wegbegrenzungs-Funktion an die Antriebsregelung (3) der Werkstücktransporteinrichtung (2) sendet, die einen Notstopp der Werkstücktransporteinrichtung (2) oder ein Sperren des Einfahrbereiches der Werkstücktransporteinrichtung (2) in den Werkstückbereitstellungsplatz (4) bewirkt, **dadurch gekennzeichnet, dass** die opto-elektronische Schutzeinrichtung (5) auch erkennt, wenn die Person (19) den Überwachungsbereich (6) wieder verlassen hat und dann automatisch eine Quittierung an die Antriebsregelung (3) der Werkstücktransporteinrichtung (2) sendet, die dort dann einen automatischen Wiederanlauf oder eine automatische Löschung der Wegbegrenzung bewirkt, wobei die Sensoreinrichtung (7) einen äußeren und inneren Überwachungsbereich (13, 14) abtastet, welcher teilweise nur über eine Barriere in Form eines begehbaren Podestes (41) betretbar ist.

17. Verfahren nach Anspruch 16, **dadurch gekennzeichnet, dass** beim Eindringen einer Person (19) in den inneren Überwachungsbereich (14) die automatische Quittierung gesperrt wird, so dass in diesem speziellen Fall kein automatischer Wiederanlauf der Werkstücktransporteinrichtung (2) oder keine automatische Löschung der Wegbegrenzung möglich ist.

## Claims

1. A processing centre (1) for a cutting processing, comprising
a power-operated workpiece transport device (2) including a drive controller (3),
a workpiece preparation place (4) accessible by the workpiece transport device (2) through an access opening (25),
a contactless operating optoelectronic protection device (5) with which a monitoring region (6) about the workpiece preparation place (4) is generated,
sensor means (7) in or at the optoelectronic protection device (5) for irradiating electromagnetic radiation (8) into the monitoring region (6)
a receiving and evaluation unit (9) in or at the optoelectronic protection device (5) for receiving and evaluating of electromagnetic radiation (8) reflected from the monitoring region (6),
signalling and/or switching means (10) in or at the optoelectronic protection device (5) for automatically triggering a security-relevant emergency stop function for the drive controller (3) for stopping the workpiece transport device (2) when a person (19) enters the monitoring region (6), or for automatically triggering a security-relevant path restriction function for the drive controller (3) for blocking the feeding area of the workpiece transport device (2) into the workpiece preparation place (4) when a person (19) enters the monitoring region (6), and
a signal line (11) between the optoelectronic protection device (5) and the drive controller (3),
**characterized in that**
the optoelectronic protection device (5) additionally comprises signalling and/or switching means (12) for automatically quitting the security-relevant emergency stop function or path restriction function for the drive controller (3) of the workpiece transport device (2) after the person (19) has left the monitoring region (6) such that the workpiece transport device (2) will start up automatically and freely and can be moved into the workpiece preparation place (4) automatically and freely, wherein the monitoring region (6) is divided into an external monitoring region (13) and an internal monitoring region (14), and the internal monitoring region (14) is partially accessible only through a barrier in the form of a walkable platform (41).

2. The processing centre of claim 1, **characterized in that** the optoelectronic protection device (5) comprises means to lock the automatic quitting, when a person (19) has entered the internal monitoring region (14).

3. The processing centre of claim 1 or 2, **characterized in that** the external dimensions of the internal monitoring region (14) are made discernible by visual means.

4. The processing centre of one of claims 1 to 3, **characterized in that** the access opening (25) from the workpiece preparation place (4) to the workpiece transport device (2) comprises a space (17) which can be trespassed by a person (19).

5. The processing centre of claim 4, **characterized in that** the access opening (25) from the workpiece preparation place (4) to the workpiece transport device (2) can be trespassed (17) by a person (19) only through the internal monitoring region (14).

6. The processing centre of one of claims 1 to 3, **characterized in that** the access opening (25) from the workpiece preparation place (4) to the workpiece transport device (2) is secured against trespassing by a person (19) through a solid separating protection device (39).

7. The processing centre of one of claims 1 to 6, **characterized in that** the access opening (25) from the workpiece preparation place (4) to the workpiece transport device (2) is secured against a person (19) grasping through by a power-operated, movable separating and position-supervised protection device (38).

8. The processing centre of claim 7, **characterized in that** the control of the power-operated movable separating protection device (38) is correlated to the drive controller (3) of the workpiece transport device (2) in terms of control technology.

9. The processing centre of one of claims 1 to 8, **characterized in that** the sensor means (7) in the optoelectronic protection device (5) are formed as a laser scanner.

10. The processing centre of claim 9, **characterized in that** the laser scanner generates one or more horizontal and two-dimensional monitoring region(s) (31).

11. The processing centre of one of claims 2 to 10, **characterized in that** the automatic quitting can be released by a manually operable release button (15), when the person (19) has left the internal monitoring region (14).

12. The processing centre of claim 11, **characterized in that** the manually operable release button (15) is disposed outside the dangerous region of the workpiece transport device (2) at a position from where the working area of the workpiece transport device (2) is clearly visible for the operator.

13. The processing centre of one of the preceding claims, **characterized in that** the drive controller (3) for the workpiece transport device (2) comprises signalling and/or switching means which enable a fail-safe emergency stop and/or a fail-safe path restriction pursuant to control category 3 of EN 954-1.

14. The processing centre of one of the preceding claims, **characterized in that** the drive controller (3) for the workpiece transport device (2) comprises signalling and/or switching means which enable a fail-safe speed supervision pursuant to control category 3 of EN 954-1.

15. The processing centre of one of the preceding claims, **characterized in that** the workpiece preparation place (4) is formed as a work bench, in particular a rotatable work bench (34).

16. A method for securing a processing centre (1) for a cutting processing, comprising a power-operated workpiece transport device (2) including a drive controller (3) and a workpiece preparation place (4) accessible by the workpiece transport device (2) by using an optoelectronic protection device (5), wherein, by using the optoelectronic protection device (5), a monitoring region (6) about the workpiece preparation place (4) is scanned by sensor means (7) irradiating electromagnetic radiation (8) and which outputs an emergency stop function or a path restriction function to the drive controller (3) of the workpiece transport device (2) upon receipt of a reflected radiation caused by a person (19) entering the monitoring region (6), effecting an emergency stop of the workpiece transport device (2) or a blocking of the feeding area of the workpiece transport device (2) into the workpiece preparation space (4), **characterized in that** the optoelectronic protection device (5) also recognizes when the person (19) has left the monitoring region (6) and then automatically outputs a quitting to the drive controller (3) of the workpiece transport device (2), which then effects an automatic start-up or an automatic cancelling of the path restriction, wherein the sensor means (7) scan external and internal monitoring regions (13, 14), which are partially accessible only through a barrier in the form of a walkable platform (41).

17. The method of claim 16, **characterized in that** the automatic quitting is locked when a person (19) enters the internal monitoring region (14), such that, in this specific case, no automatic start-up of the workpiece transport device (2) and no automatic cancelling of the path restriction is possible.

## Revendications

1. Centre d'usinage (1) pour l'usinage par enlèvement de copeaux avec un dispositif de transport de pièces usinées actionné par une énergie extérieure (2) à commande d'entraînement (3), avec un poste de préparation des pièces usinées (4) accessible au dispositif de transport de pièces usinées (2) par une ouverture d'accès (25), avec un dispositif de protection optoélectronique sans contact (5) grâce auquel une zone de surveillance (6) est créée autour du poste de préparation des pièces usinées (4), avec un dispositif de capteur (7) dans ou sur le dispositif de protection optoélectronique (5) pour l'émission d'un rayonnement électromagnétique (8) vers la zone de surveillance (6), avec une unité de réception et d'évaluation (9) dans ou sur le dispositif de protection optoélectronique (5) pour la réception et l'évaluation du rayonnement électromagnétique (8) réfléchi depuis la zone de surveillance (6), avec des moyens de signalisation et/ou de commutation (10) dans ou sur le dispositif de protection optoélectronique (5) pour le déclenchement automatique d'une fonction d'arrêt d'urgence de sécurité de la commande d'entraînement (3) pour immobiliser le dispositif de transport des pièces usinées (2) après qu'une personne (19) s'est introduite dans la zone de surveillance (6) ou pour le déclenchement automatique d'une fonction de limitation de déplacement de la commande d'entraînement (3) de sécurité afin de bloquer la zone d'entrée du dispositif de transport des pièces usinées (2) dans le poste de préparation des pièces usinées (4) après qu'une personne (19) s'est introduite dans la zone de surveillance (6), et avec une ligne de signalisation (11) entre le dispositif de protection optoélectronique (5) et la commande d'entraînement (3), **caractérisé en ce que** le dispositif de protection optoélectronique (5) possède par ailleurs des moyens de signalisation et/ou de commutation (12) pour l'accusé de réception automatique des fonctions d'arrêt d'urgence ou de limitation de déplacement de sécurité pour la commande d'entraînement (3) du dispositif de transport des pièces usinées (2) après que la personne (19) a quitté la zone de surveillance (6), de sorte que le dispositif de transport des pièces usinées (2) peut de nouveau redémarrer automatiquement et librement et puisse de nouveau entrer automatiquement et librement dans le poste de préparation des pièces usinées (4), la zone de surveillance (6) étant partagée en une zone de surveillance extérieure (13) et une zone de surveillance intérieure (14), et la zone de surveillance intérieure (14) étant partiellement accessible uniquement via une barrière sous forme d'une plate-forme accessible (41).

2. Centre d'usinage selon la revendication 1, **caractérisé en ce que** le dispositif de protection optoélectronique (5) possède des moyens afin de bloquer l'accusé de réception automatique lorsqu'une personne (14) est entrée dans la zone de surveillance intérieure (14).

3. Centre d'usinage selon la revendication 1 ou 2, **caractérisé en ce que** les dimensions extérieures de la zone de surveillance intérieure (14) sont rendues reconnaissables grâce à des moyens visuels.

4. Centre d'usinage selon l'une des revendications 1 à 3, **caractérisé en ce que** l'ouverture d'accès (25) du poste de préparation des pièces usinées (4) au dispositif de transport des pièces usinées (2) présente une zone pouvant être franchie ou contournée par l'arrière (17) par une personne (19).

5. Centre d'usinage selon la revendication 4, **caractérisé en ce que** l'ouverture d'accès (25) du poste de préparation des pièces usinées (4) au dispositif de transport des pièces usinées (2) peut être franchie ou contournée par l'arrière (17) par une personne (19) seulement via la zone de surveillance intérieure (14).

6. Centre d'usinage selon l'une des revendications 1 à 3, **caractérisé en ce que** l'ouverture d'accès (25) du poste de préparation des pièces usinées (4) au dispositif de transport des pièces usinées (2) est protégée contre le franchissement ou le contournement par l'arrière d'une personne (19) grâce à un dispositif de protection de séparation fixe (39).

7. Centre d'usinage selon l'une des revendications 1 à 6, **caractérisé en ce que** l'ouverture d'accès (25) du poste de préparation des pièces usinées (4) au dispositif de transport des pièces usinées (2) est protégée contre le passage d'une main par une personne (19) avec un dispositif de protection (38) de séparation à position surveillée et mobile actionné par une énergie extérieure.

8. Centre d'usinage selon la revendication 7, **caractérisé en ce que** la commande du dispositif de protection (38) de séparation mobile et actionné par une énergie extérieure se trouve en relation commande de technique avec la commande d'entraînement (3) du dispositif de transport des pièces usinées (2).

9. Centre d'usinage selon l'une des revendications 1 à 8, **caractérisé en ce que** le dispositif de capteur (7) est réalisé en tant que balayeur laser dans le dispositif de protection optoélectronique (5).

10. Centre d'usinage selon la revendication 9, **caractérisé en ce que** le balayeur laser génère une ou plusieurs zones de surveillance (31) réalisées de manière horizontale et plate.

11. Centre d'usinage selon l'une des revendications 2 à 10, **caractérisé en ce que** grâce à un bouton de déclenchement (15) pouvant être actionné manuellement, l'accusé de réception automatique peut de nouveau être déclenché lorsque la personne (19) a quitté la zone de surveillance intérieure (14).

12. Centre d'usinage selon la revendication 11, **caractérisé en ce que** le bouton de déclenchement (15) pouvant être actionné manuellement est mis en place en-dehors de la zone de danger du dispositif de transport des pièces usinées (2) à un endroit à partir duquel la zone d'usinage du dispositif de transport des pièces usinées (2) est bien visible pour l'opérateur.

13. Centre d'usinage selon l'une des revendications précédentes, **caractérisé en ce que** la commande d'entraînement (3) pour le dispositif de transport des pièces usinées (2) possède des moyens de signalisation et/ou de commutation, lesquels permettent un arrêt d'urgence sans erreur isolée et/ou une limitation de déplacement sans erreur isolée conformément à la catégorie 3 des systèmes de commande selon la norme EN 954-1.

14. Centre d'usinage selon l'une des revendications précédentes, **caractérisé en ce que** la commande d'entraînement (3) pour le dispositif de transport des pièces usinées (2) possède des moyens de signalisation et/ou de commutation permettant une surveillance de la vitesse sans erreur isolée conformément à la catégorie 3 des systèmes de commande selon la norme EN 954-1.

15. Centre d'usinage selon l'une des revendications précédentes, **caractérisé en ce que** le poste de préparation des pièces usinées (4) est réalisé en tant que table de montage, en particulier en tant que table de montage rotative (34).

16. Procédé pour la sécurisation d'un centre d'usinage (1) pour l'usinage par enlèvement de copeaux avec un dispositif de transport de pièces usinées actionné par une énergie extérieure (2) à commande d'entraînement (3) et avec un poste de préparation des pièces usinées (4) accessible au dispositif de transport des pièces usinées (2) en utilisant un dispositif de protection optoélectronique (5), dans lequel avec un dispositif de protection optoélectronique (5), une zone de surveillance (6) autour du poste de préparation des pièces usinées (4) est balayée à l'aide d'un dispositif de capteur (7), lequel émet un rayonnement électromagnétique (8) et lequel, en cas de réception d'un rayonnement réfléchi résultant de l'entrée d'une personne (19) dans la zone de surveillance (6) envoie une fonction d'arrêt d'urgence ou une fonction de limitation de déplacement à la commande d'entraînement (3) du dispositif de transport des pièces usinées (2) ayant pour effet un arrêt d'urgence du dispositif de transport des pièces usinées (2) ou un blocage de la zone d'entrée du dispositif de transport des pièces usinées (2) dans le poste de préparation des pièces usinées (4), **caractérisé en ce que** le dispositif de protection optoélectronique (5) reconnaît également le fait que la personne (19) a de nouveau quitté la zone de surveillance (6) et envoie alors automatiquement un accusé de réception à la commande d'entraînement (3) du dispositif de transport des pièces usinées (2), lequel y produit alors un redémarrage automatique ou une annulation automatique de la limitation du déplacement, le dispositif de capteur (7) balayant une zone de surveillance extérieure et intérieure (13, 14), laquelle est partiellement accessible uniquement via une barrière sous forme d'une plate-forme accessible (41).

17. Procédé selon la revendication 16, **caractérisé en ce qu'**en cas d'entrée d'une personne (19) dans la zone de surveillance intérieure (14), l'accusé de réception automatique est bloqué, de sorte que dans ce cas particulier il n'y a pas de possibilité d'un redémarrage automatique du dispositif de transport des pièces usinées (2) ou d'une annulation automatique de la limitation de déplacement.
